Europäisches Patentamt

European Patent Office

Office européen des brevets

(11) Publication number: **0 059 087**
**B1**

## EUROPEAN PATENT SPECIFICATION

(45) Date of publication of patent specification: **29.05.85**

(21) Application number: **82300857.8**

(22) Date of filing: **19.02.82**

(51) Int. Cl.⁴: **C 09 D 5/32, C 09 D 3/81**

(54) Coating compositions for solar selective absorption.

(30) Priority: **19.02.81 JP 24094/81**

(43) Date of publication of application:
**01.09.82 Bulletin 82/35**

(45) Publication of the grant of the patent:
**29.05.85 Bulletin 85/22**

(84) Designated Contracting States:
**DE FR GB**

(56) References cited:
US-A-3 524 906
US-A-4 011 190
US-A-4 153 753
US-A-4 211 210

(73) Proprietor: **Matsushita Electric Industrial Co.,
Ltd.**
**1006, Oaza Kadoma**
**Kadoma-shi Osaka-fu, 571 (JP)**

(72) Inventor: **Maki, Masao**
**46-15, 3-bancho Fukigaoka**
**Nabari-shi Mie-Ken (JP)**
Inventor: **Fukuda, Hiroshi**
**A-407, 393, Matsukasa-cho Koriyama-shi**
**Yamato Nara-ken (JP)**
Inventor: **Sano, Seiichi**
**5-6, Fukura**
**Usuki-shi Ooita-ken (JP)**

(74) Representative: **Hartley, David et al**
**c/o Withers & Rogers 4 Dyer's Buildings Holborn**
**London, EC1N 2JT (GB)**

Courier Press, Leamington Spa, England.

## Description

This invention relates to coating compositions for selective solar absorption which can provide effective selective solar absorbing coatings for solar collector and also to articles obtained from these coating compositions.

A variety of black absorber layers such as obtained from ordinary black paints which have been utilised in the field of domestic hot water supply, effectively absorb incident solar radiation but readily emit thermal energy once it has been absorbed.

As is well known in the art, solar collector surfaces or layers should preferably not only absorb solar energy in the ultraviolet, visible and near-infrared regions as much as possible, but also minimise the energy emitted from the surface once the temperature of the surface has been increased by the absorption of the solar energy.

Owing to the lack of materials having the requisite properties, attempts have been made to achieve a high degree of solar selectivity by the use of various combination systems.

One known technique is the formation of absorbers on many metal substrates which are a good reflector in the infrared region. The absorber is required to absorb solar radiation at the short wavelengths of, say 0.3—2.0 micrometers without impairing the reflectivity of metal substrate. For this purpose, black copper, black chrome, black nickel and the like are used. In practice, this technique has mainly been applied to systems at temperatures higher than 92°C which is the temperature at which the solar absorptance of the black body will equilibrate with the thermal emittance loss. In this system, the ratio of the solar absorptance, $\alpha$ to the thermal emittance, $\varepsilon$, is significantly lower thermal emittances resulting in lower solar absorptances and vice versa. In order to increase the ratio, $\alpha/\varepsilon$, it is the general practice that the selective absorption films of black copper, black chrome and the like are controlled at levels of a solar absorptance of 0.90 and a thermal emittance of 0.15.

For domestic hot water supplies, the absolute value of $\alpha$ is more significant than the ratio, $\alpha/\varepsilon$, since the surface temperature of domestic collector systems is at most as low as 75°C and thus the level of energy radiating from the surface is low. In flat plate collector systems for hot water service, however, the thermal radiative loss from the collector surface may reach even 20—30% of the total loss of the system, so that it will be effective in improving the collector efficiency to suppress the thermal emittance from the collector surface to a low level.

The first requirement for apparatus utilising solar energy is economy because they are used for energy saving. The selective absorption films of, for example, black chrome and the like mentioned hereinbefore are not well suited to domestic water heating installation since large scale plating equipment is required so that processing costs are high.

Some attempts have been made to produce selective absorption paint films of coatings which are easy to apply, cheap to produce and capable of covering large areas. For example, the use of paints comprising semiconductor pigments such as Ge, Si, PbS or the like dispersed in silicone resins or the like have been investigated and reported in "High absorptivity solar absorbing coatings" by D. M. Mattox and R. R. Sowell, J. Cac, Sci, Technol., Vol, 11, no. 4 pp 793—796 (1974) and "Solar absorptance and emittance properties of several solar coatings" by R. B. Pettit and R. R. Sowell, J. Vac. Sci. Technol. Vol 13, No. 2, pp 596—601 (1976).

With these paints, however, the absorptance, $\alpha$, is over 0.9 but the thermal emittance, $\beta$, is in the range of 0.70—0.90 in all samples, hence the selective absorptivity is poor. Pettit *et al* states that the high emittance is due to the fact that when the film thickness of the silicone binder itself exceeds 10 micrometers, the emittance increases. In order to overcome this disadvantage, it has been proposed to increase the ratio of semiconductive particle contact of the paint, so decreasing the amount of silicone resin in paint film. However, this tends to increase the viscosity of paint reducing the mechanical strength of paint film and impairing adhesion between the paint and metal substrate.

U.S. P. 3,524,906 relates to transparent and weatherable polymer blends which comprises two acrylate polymers and polyvinylidene fluoride. As is particularly stated in Example 1 of this reference, starting polymer resins are blended in a rubber mill at a temperature of 180°C, at which the starting polymer resins will be completely melted. That is, the polyvinylidene fluoride is completely melted with the other acrylate polymers to give a transparent polymer blend. In this polymer blend, the polyvinylidene fluoride is present as a continuous phase.

U.S. P 4,153,753 discloses coating compositions for selective solar absorption which comprises a dispersion of particles such as the oxides of copper, cobalt, nickel, iron or mixtures thereof in liquid or solid paraffin, various forms of polyethylene or mixtures of these substances. Research has shown that absorption films obtained by conventional paint coating techniques invariably present the following technical problems: (a) if the thickness of paint film is reduced, the emittance is lowered but undesirably the solar absorptance is also lowered; (b) with regard to film thickness, even though experiments might confirm that a film thickness of 1 micrometer yields relatively satisfactory results to selective absorptivity, no coating techniques are yet known for forming a stable and uniform film 1 micrometer thick; (c) such a thin film of about 1 micrometer, if obtained, would exhibit only poor and unreliable physical properties.

This invention aims to overcome at least some of the technical problems associated with conventional coatings.

According to this invention we propose a coating composition for selective solar absorption which comprises a dispersion in a binder, of particles of an inorganic black pigment, characterised in that the binder is a thermosetting acrylic resin and in that particles of a low molecular weight fluorocarbon resin are also dispersed in the binder together with the particles of inorganic black pigment selected from the group consisting of oxides and double oxides of Fe, Mn, Cu, Cr, Co and Ni and mixtures thereof, the particles of fluorocarbon resin being present in an amount of from 5 to 15 parts by weight per 100 parts by weight of the acrylic resin and the particles of pigment being present in an amount of from 45 to 65 parts by weight per 100 parts by weight of the acrylic resin and having a size ranging from 0.01 to 0.5 microns.

The invention also includes a solar energy collector or other article comprising a metal substrate having thereon a coating, preferably having a thickness of 1.5—5.0 microns, formed by applying a composition according to this invention.

Coating compositions according to this invention can be used in a highly diluted condition since the constituents show good affinity for one another and excellent dispersability in solvent. Accordingly, a very thin film of a dry thickness of 2—5 microns is ensured with good physical properties such as good adhesion to metal substrate and high mechanical strengths. In addition, the film obtained from the composition is met by the requirement of the invention that the solar absorptance, $\alpha$, is as high as 0.93—0.94 and the thermal emittance is in the order of 0.3—0.5. Thus, both the physical properties and the selective absorptivity of the paint film are excellent and well-balanced. The application of the coating composition in a highly diluted state is very advantageous in that when the densities of the dry film and coating composition are each taken as 1 and the solid content in the paint is in the range of 10—17 wt %, the dilution is about 1: about 6—10 and a paint film of 3 micrometers in dry thickness can be formed in a wet thickness of 18—30 microns. This facilitates trouble free wet coating by known techniques.

Preferred embodiments of the invention will now be described with reference to the accompanying drawings, of which:

Figure 1 is a graph of thermal emittance of two types of resins plotted against film thickness;

Figure 2 is a graph of the absorptance and emittance of a film obtained from a coating composition of the invention plotted against film thickness;

Figure 3(a) to 3(c) are, respectively, graphs of heat stability, weatherability and corrosion resistance of a film obtained according to the invention; and

Figure 4 is a graph comparing the solar radiation collector efficiency of flat plate collectors applied with a coating composition of the invention and a known black paint; and with reference to the Examples.

The choice of the pigment and binder in a coating composition for selective solar absorption according to the invention determines the selective absorptivity, ease with which the paint or coating composition can be prepared and physical properties of film. Although it is necessary to balance these factors, the selective absorptivity is of prime importance. That is, it is most important how to suppress absorption of thermal radiation in the infrared region at wavelengths over 2 microns. An ideal selective solar coating completely absorbs solar radiation in wavelength below 2 microns but is transparent with respect to radiation in wavelengths over 2 microns. A number of factors affecting the selective absorptivity of the film must be considered and include the following:

(1) Substrate metal: (emittance) Infrared reflectivity

(2) Pigment: Size and size distribution, spectral characteristic (ultraviolet, visible, near-infrared, infrared absorptances), shape, refractive index, dielectric constant etc.

(3) Binder: Spectral characteristic, refractive index, dielectric constant etc.,

(4) Pigment-binder: PVC (pigment volume concentration), dispersibility of pigment, close effective diffractiveness), difference in refractive index, etc.

(5) Film: Thickness.

These factors are taken into account in order to evaluate pigments and binders.

In known black paint coatings, silicone resins have often been used. This is because silicone resins exhibit excellent heat stability.

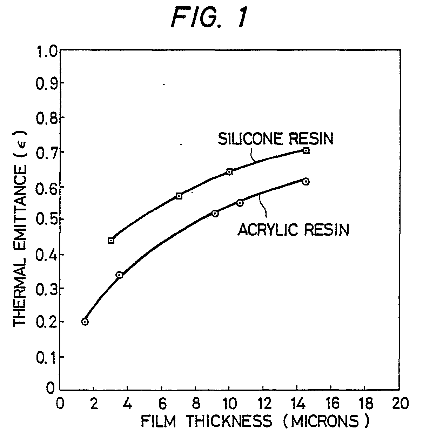

For domestic hot water supply systems, it is considered sufficient to withstand temperatures of at most 150°C and, with this in mind, a wide variety of resins have been studied. About 50 resins were used to evaluate the relationship between the film thickness and the thermal emittance ($\varepsilon$) by forming a film of each resin free of any pigment of a stainless steel plate (18Cr—2M) by the use of a film applicator. It was found that a thermosetting resin produced good results. The thermal emittance of a typical silicone resin and an acrylic resin is compared in Figure 1 from which, it will be seen that the acrylic resin is superior to the silicone resin and this is true even when other properties such as weatherability, adhesion to the metal substrate, ease of application etc., are taken into account.

It is preferred that the thermosetting acrylic resins are made of monomer units which have main chains such as of acrylic acid, methacrylic acid and esters thereof and one or more functional side chains which take part in self-crosslinkage. Such side chains include carboxyl groups, hydroxyl groups, amido groups, methylol groups, epoxy groups, glycidyl groups and the like. Examples of such monomers include acrylic esters such as methyl acrylate, ethel acrylate, glycidyl acrylate, and the like, methacrylic esters such as methyl methacrylate, ethyl methacrylate, glycidyl methacrylate and the like, acrylamide, methylol acrylamide, hydroxypropyl methacrylate and the like. The thermosetting acrylic resins can be prepared by polymerising at least two monomers selected from those mentioned above under conditions which are

3

well known in the art. Further, other monomers copolymerisable with the acrylic or methacrylic acid or ester can be used and include, for example, styrene. In some cases, seven or eight monomers of different types are polymerised to attain a desired level of susceptibility to thermal cross-linkage and desired physical properties. Accordingly, a diversity of combinations of the monomers are conceivable and such combinations can correspondingly provide a diversity of multi-polymers. In this sense, the thermosetting acrylic resins referred to herein are intended to include all the thermosetting resins containing acrylic and/ or methacrylic main chains and one or more functional side chains capable of thermal crosslinkage. In view of the availability, self-crosslinking, thermosetting amido-modified acrylic resins are preferably used. These resins should be soluble in organic solvent and generally have a molecular weight ranging from 5000 to 100,000, preferably 3000 to 4000.

The inorganic pigments are, as described, black pigments which show less thermal absorptance in wavelengths over 2 microns and are oxide or double oxides of iron (Fe), manganese (Mn), copper (Cu), chromium (Cr), cobalt (Co), and nickel (Ni). These oxides and double oxides may be used singly or in combination. Specific examples of these oxides or double oxides are black oxides such as $Fe_3O_4$, $MnO_2$, CuO, $CO_3O_4$ and NiO and double oxides indicated in Table 1 below though any other oxides or double oxides as defined above can be used as far as they are black in colour. Table 1, lists the emittance of various commercially available pigments, which is obtained by forming a layer of a pigment alone in a thickness of about 2 mm on an aluminium plate under a compression pressure of about 0.5 kg/cm$^2$.

TABLE 1

Emittance Characteristic of Black Pigments

| Black Pigment | Thermal Emittance |
|---|---|
| Carbon black | 0.95 |
| $CoO.Cr_2O_3.MnO_2.Fe_2O_3$ | 0.72 |
| $CoO.NiO.Fe_2O_3.MnO$ | 0.78 |
| $CuO.Cr_2O_3.MnO$ | 0.80 |
| $(FeO)_x (Fe_2O_3)_y$ | 0.85 |
| $CuO.Cr_2O_3$ | 0.78 |
| $Fe_2O_3.MnO_2.CuO$ | 0.65 |

In conventional black coatings, carbon black is often used and such coatings exhibit high thermal emittance because of the high absorptance of carbon black in the infrared region.

The black pigments have a relatively high thermal emittance as seen in Table 1. This is because the size of each pigment used in this test is in the range of 0.5—1.5 micrometer. It has been found that when the particle size is suitbly controlled in the range of 0.01—0.5 microns, the thermal emittance can significantly be improved as will be particularly illustrated in Example 1 appearing hereinafter.

As is seen from Table 1, the $Fe_2O_3.MnO_2.CuO$ pigment is most excellent in thermal emittance, and this pigment is conveniently inexpensive.

Although combinations of these inorganic black pigments and acrylic resins can improve the selective absorptivity of the film, their adhesion to metal substrate is poor and other properties such as heat stability, corrosion resistance and the like are not consistently high. Accordingly, a third component is added which shows good physical properties when applied as a thin film, gives a good influence on the dispersability of pigment, and produces substantially no adverse effect on the selective absorptivity. This third component is a low molecular weight fluorocarbon resin which when combined with the inorganic black pigment and acrylic resin, can improve physical properties of film without giving any ill effect on the selective absorptivity. Moreover, the fluorocarbon resin is effective in improving heat stability, hardness and resistances to steam, moisture, corrosion and abrasion.

Preferred fluorocarbon resins have generally a molecular weight of about 300 to 1,000 and include tetrafluoroethylene resin, vinyl fluoride resin, vinylidene fluoride resin and the like. These fluorocarbon resins are preferably used in the form of particles having a size of 0.1 to 1 micrometer. Especially when particles of tetrafluoroethylene resin are used, they serve to absorb the light in wavelengths ranging from 1 to 2 micrometers and for this reason, tetrafluoroethylene resin particles are preferred.

4

**0 059 087**

The most preferable combination of the three components is a combination of a self-crosslinking, thermosetting amido-modified acrylic resin, a tetrafluoroethylene resin and $Fe_2O_3.MnO.CuO$.

The composition can be readily prepared by mixing particles of an inorganic black pigment, an acrylic resin and a fluorocarbon resin in suitable solvent by any known means such as a ball mill. In order to obtain a thin paint film, the dispersion preferably has a low solid content of 5 to 20, preferably 10 to 17 wt.% of the composition. Solvents useful for this purpose are those which can dissolve the acrylic resin component therein and, mixed solvents are generally used including mixtures of normal butanol, aromatic compounds such as xylene, toluene, benzene and the like, ketones such as methyl ethyl ketone, methyl isobutyl ketone, acetone and the like, etc. Upon preparation, other additives such as surfactants, fillers, dispersing agents and the like may be added as usual unless these additives produce an ill effect on final film.

Advantageously, the coating composition is applied, for example, by spraying on a metal substrate which is low in emittance and then baked in the usual manner. Generally, copper, aluminium, stainless steels and the like are used as the substrate.

In the following examples, the metal substrate used was a plate of stainless steel (YUS—190, trade name), having a size of 70 mm × 150 mm × 0.3 mm, and defatted with alkali. This substrate had an emittance of 0.1 in wavelengths of 3—30 microns. The solar absorptance of the selective absorption film was determined as follows: the spectral reflectance was measured by means of spectrometer Model MPS—5000 (made by Shimazu Seishakusho Co. Ltd.,) equipped with an integrating sphere reflector, and an absorptance was calculated from the ratio of the spectral reflectance to the AIR MASS 2 radiation of black body at 6,000°K. The thermal emittance was measured by the use of an emission meter made by Devices and Services Co. Ltd. In examples, parts are by weight.

## Example 1

Particle Size of Pigment

A commercially available $Fe_2O_3.MnO_2.CuO$ pigment was passed through sieves to divide it into six grades of particle size. A self-crosslinking, thermosetting amido-modified acrylic resin (Durakuron SE—5661, available as a solution in solvent naphtha having a solid content of 50 wt.%) was used as the thermosetting acrylic resin. 100 parts of this acrylic resin solution, 26 parts of the pigment of each size group, 5 parts of a fluorocarbon resin powder with a size of 0.1—1 micrometer (Lubron L—2, commercial low molecular weight tetrafluoroethylene resin) and 400 parts of a mixed solvent composed of 29 wt.% of n-butanol, 21 wt.% of xylene and 50 wt.% of Solvesso # 100 (commercial name solvent naphtha) were charged into a ball mill there they were mixed for 24 hours to give a paint.

This paint was sprayed over the stainless steel substrate in a dry thickness of 3 microns and then baked for 10 minutes at 200°C. The resulting film showed good physical properties. In Table 2, there are shown spectral characteristics in relation to the particle size of the pigment.

### TABLE 2

Relation Between Selective Absorptivity and Particle
Size of Pigment

| Particle size of Pigment (microns) | Solar Absorptance ($a$) | Thermal Emittance ($\epsilon$) |
|---|---|---|
| 0.005 — 0.01 | 0.90 | 0.85 |
| 0.01 — 0.10 | 0.93 | 0.40 |
| 0.10 — 0.20 | 0.94 | 0.35 |
| 0.20 — 0.50 | 0.94 | 0.40 |
| 0.50 — 1.0 | 0.94 | 0.56 |
| 1.0 — 2.0 | 0.94 | 0.68 |

As is seen from the results in Table 2, the particle size is favourably in the range of 0.01—0.5 microns where the thermal emittance is below 0.50. The reason why such a fine size is effective in improving the thermal emittance is thought to be due to the fact that the light scattering of the fine particles acts favourably on the selective solar absorptivity. The reason when the finest particles result in much poorer selective solar absorptivity is not clearly known but this might result from poor dispersability of the finest particles.

5

## Example 2

Ratio of Pigment/Acrylic Resin

The general procedure of Example 1 was repeated except that the pigment had a size of 0.02—0.5 microns and the amount of the pigment relative to the acrylic resin was changed.

As a result, it was found that the ratio by weight of the pigment to the acrylic resin was generally in the range of 45/100 to 65/100, preferably 50/100 to 55/100 and most preferably 55/100.

Ratios less than 45/100 are unfavourable for the following reason. An increase in resin content results in improved gloss finish, by which the surface reflection increases and thus the absorptance ($\alpha$) decreases. On the other hand, the resin is higher in infrared absorptivity than the pigment, with attendant increase of the emittance ($\varepsilon$). For instance the film obtained from a composition having a pigment/acrylic ratio of 40/100 exhibits a solar absorptance of 0.90 and a thermal emittance of 0.65 though the mechanical strength of the film itself is increased.

Ratios less than 65/100 are also unfavourable since the surface gloss is almost lost. The absorptance of film increases and the emittance decreases but the physical properties of film are considerably reduced with the film surface being so soft as to be readily scratched by nail.

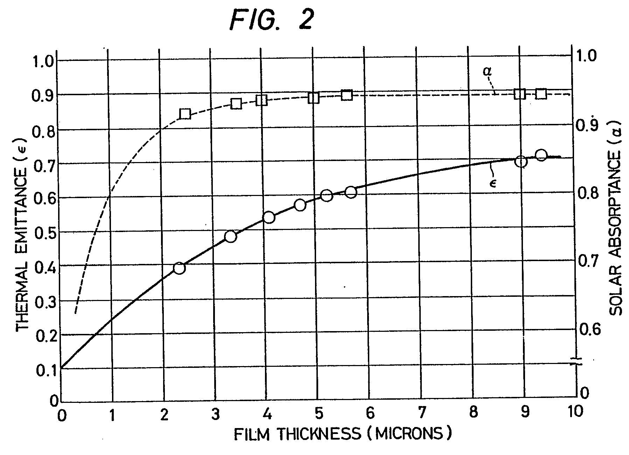

In order to satisfy both the selective absorptivity and the film properties, the ratio of the pigment/the acrylic resin is in the range of 45/100 to 65/100 on a weight basis. Figure 2, shows the relation between the thickness of a film having the pigment/acrylic resin ratio 55/100 and the absorptance and emittance thereof.

It will be noted that the best physical properties are achieved with film thickness in excess of 1.5 micrometers.

## Example 3

Effect of Fluorocarbon Resin

In the same manner as in Example 1 using the particle size of Example 2, selective solar absorption films of compositions to which the fluorocarbon resin was added in different amounts and 10 wt.% of butylated melamine, epoxy or silicone resin based on the acrylic resin was added instead of the fluorocarbon resin.

Consequently, it was found that the films containing no fluorocarbon resin and 10 wt.% of each of the melamine epoxy and silicone resins based on the acrylic resin had the same absorptance of 0.94. The film having the fluorocarbon resin content of 10 wt.% of the acrylic resin had an absorptance of 0.94 but its surface was semi-glossy, which was different from the previous rather glossy films. The emittance increased by about 10% for the films using melamine, epoxy and silicone resins but the film containing the fluorocarbon resin showed no change with respect to the emittance.

A significant effect of addition of the fluorocarbon resin appeared when it was added in an amount of 5 wt.% or more based on the acrylic resin with good physical properties of the resulting film. In order to confirm the above, various tests were conducted as summarised in Table 3.

For example, the hardness of a film having a fluorocarbon content of 5 wt.% increased from H of the fluorocarbon resin-free film to 3H when determined by the pencil hardness test. As for the heat stability, when test films were first allowed to stand at 150°C for 200 hours and then immersed in boiling water for 24 hours followed by the peeling test using adhesive tape, it was found that the fluorocarbon resin-free film was partly peeled off in the form of spots but the fluorocarbon resin-containing film showed no change.

Similarly, cross cut films were subjected to the salt spray test for 500 hours and then to the peeling test using adhesive tape, with the result that films containing 10 wt.% of each of melamine, epoxy and silicone resins based on the acrylic resin suffered blister or peeling-off but little or no change was observed with the fluorocarbon resin containing film. From the above, it will be appreciated that the addition of the fluorocarbon resin contributes to improve the heat and corrosion resistance of the film.

As described hereinbefore, the fluorocarbon resins useful in the invention include tetrafluoroethylene resin, vinyl fluoride resin, vinylidene fluoride resin and mixtures thereof. Of these, tetrafluoroethylene resin is preferable.

The fluorocarbon resin is generally used in an amount of from 5 to 15 parts per 100 parts of the acrylic resin used, and 10 parts is optimum. Amounts exceeding 15 parts give an adverse influence on physical properties of film. For instance, when the composition is sprayed on substrate, fine globules of the composition may be cooled owing to the evaporation of solvent whereupon very slight quantity of moisture will be condensed on the globule surfaces, resulting in poor surface levelling due to the water repellency of the fluorocarbon resin.

Table 3, shows results of various tests in which a film according to the invention was made in the same manner as in Example 1 except that the pigment had a size of 0.05—2.0 microns and, for comparative purpose, a known black coating was prepared by applying a paint composition comprising 5 wt.% of carbon black having a size of 0.05 to 1 microns and the balance of a silicone binder onto a commercially available collector plate in a dry thickness of 25 microns.

### TABLE 3

Physical Properties of Inventive and Comparative Films

| Film Properties | | Test Items | Test Conditions | Film of Invention | Known Black Coating |
|---|---|---|---|---|---|
| Selective Absorptivity | | Solar absorptance ($\alpha$) | Spectrometer (0.3—2.0 microns) | 0.94 | 0.95 |
| | | Thermal emittance ($\epsilon$) | Emission Meter (3—30 microns) | 0.45 | 0.92 |
| Primary Physical Properties | | a. Peel test by tape adhesion | Adhesive tape applied to film surface and peeled off | O | O |
| | | b. Cross-cut test | Adhesive tape applied to cross-cut film and peeled off | O | O |
| | | c. Erichsen cross-cut test | Adhesive tape applied after push-in of 5 mm | ◎ | O |
| | | d. Impact resistance | Du pont method, 500 g × 1" × 50 cm | ◎ | O |
| | | e. Hardness | Pencil hardness | O | O |
| | | f. Bending test | 6 mm × 180° | O | O |
| | | g. Moisture resistance | 60°C, R.H. 90%, 10 days | O | O |
| | | h. Steam resistance | Autoclave, one cycle | O | O |
| Secondary Physical Properties | | i. Heat resistance | Primary tests (a), (b) after treatment under conditions of 150°C and 1000 hours | ◎ | O |
| | | j. Accelerated weather test | Primary tests (a), (b), (c) after measurement with the sunshine type weather meter for 2000 hours (JIS Z 0230) | O | O |
| | | k. Corrosion resistance | Primary tests (a), (b) after salt spraying for 500 hours (JIS Z 0371) | O | O |

O: Good

◎ : Excellent

As is clearly seen from Table 3, in spite of the fact that film is as thin as 3 microns in thickness, better results are obtained than those of the known black coating.

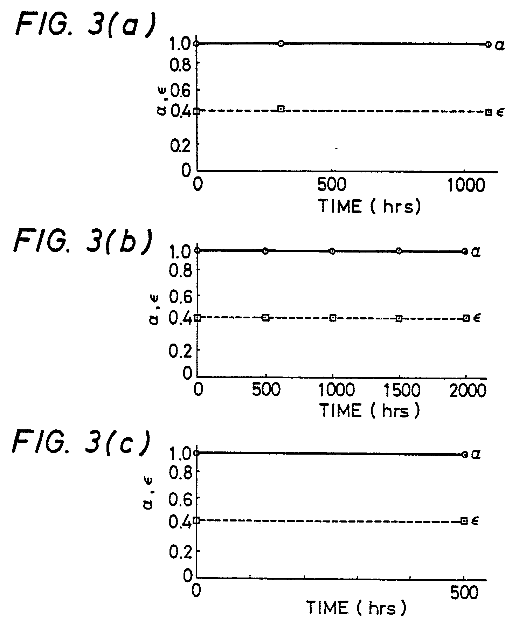

Figures 3 (a)—(c) show the results of durability tests (i to k: Table 3) of the film of the invention under accelerated conditions, revealed that the solar absorptance ($\alpha$) of 0.94 and the thermal emittance ($\epsilon$) of 0.45 are stably held.

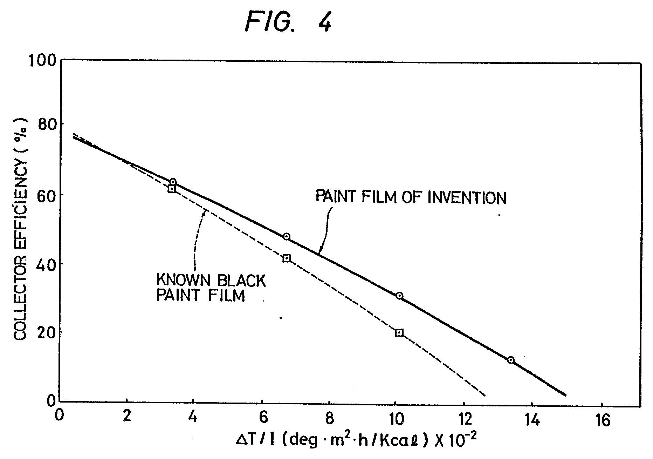

Figure 4 shows the collector efficiencies of flat plate collectors using a paint coating of the invention and a conventional black paint coating, respectively. In the vicinity of the collector efficiency of 50% for practical use, the collector efficiency of the coating of the invention increases in collector efficiency by 5% or more when compared with the known collector. If the thermal emission loss is about 20% of the total, an increase of 5% in the collector efficiency may be regarded as appropriate.

From the foregoing it will be understood that coating compositions for solar radiation according to this invention can yield films having well-balanced selective absorptivity and film properties, and which when applied as film, which may be as thin as 1.5—5 microns thick, can withstand even very severe environmental conditions.

Further, an efficient selective solar absorption film can be produced at much lower cost than (about 1/3 to 1/10 the cost of) selective absorption films such as coloured stainless steel, and is thus suitable for application to solar powered domestic installations.

**Claims**

1. A coating composition for selective solar absorption which comprises a dispersion in a binder, of particles of an inorganic black pigment, characterised in that the binder is a thermosetting acrylic resin and in that particles of a low molecular weight fluorocarbon resin are also dispersed in the binder together with the particles of inorganic black pigment selected from the group consisting of oxides and double oxides of Fe, Mn, Cu, Cr, Co and Ni and mixtures thereof, the particles of fluorocarbon resin being present in an amount of from 5 to 15 parts by weight per 100 parts by weight of the acrylic resin and the particles of pigment being present in an amount of from 45 to 65 parts by weight per 100 parts by weight of the acrylic resin and having a size ranging from 0.01 to 0.5 microns.

2. A coating composition according to claim 1, wherein the particles of the pigment are present in an amount of from 50 to 55 parts by weight per 100 parts by weight of the acrylic resin.

3. A coating composition according to claim 1 or claim 2, wherein the acrylic resin is made of monomer units which have a main chain of acrylic acid, methacrylic acid or an ester thereof and one or more functional side chains capable of crosslinkage.

4. A coating composition according to claim 3, wherein the acrylic resin is a thermosetting amido-modified acrylic resin.

5. A coating composition according to any one of claims 1 to 4, wherein the particles of the fluorocarbon resin have a size ranging from 0.1 to 1 micrometer.

6. A coating composition according to any one of claims 1 to 5, wherein the fluorocarbon resin is tetrafluoroethylene resin, vinyl fluoride resin or vinylidene fluoride resin.

7. A coating composition according to claim 6, wherein the fluorocarbon resin is tetrafluoroethylene resin.

8. A coating composition according to any one of claims 1 to 7, wherein the dispersion has a solid content of 5 to 20 wt.% of the composition.

9. A coating composition according to claim 8, wherein the solid content is in the range of 10 to 17 wt.%.

10. A solar collector or like article comprising a metal substrate having thereon a coating obtained from a composition according to any one of the preceding claims.

11. An article according to claim 10, wherein the film has a thickness of from 1.5 to 5.0 microns.

**Patentansprüche**

1. Beschichtungsmasse für selektive Absorption von Sonnenstrahlung, die eine Dispersion von Teilchen eines anorganischen schwarzen Pigments in einem Bindemittel enthält, dadurch gekennzeichnet, daß das Bindemittel ein wärmehärtbares Acrylharz ist und daß in dem Bindemittel zusammen mit den Teilchen des anorganischen schwarzen Pigments, das aus Oxiden und Doppeloxiden von Fe, Mn, Cu, Cr, Co und Ni und Mischungen davon ausgewählt ist, auch Teilchen eines niedermolekularen Fluorkohlenstoffharzes dispergiert sind, wobei die Teilchen des Fluorkohlenstoffharzes in einer Menge von 5 bis 15 Gewichtsteilen je 100 Gewichtsteile des Acrylharzes vorhanden sind und die Teilchen des Pigments in einer Menge von 45 bis 65 Gewichtsteilen je 100 Gewichtsteile des Acrylharzes vorhanden sind und eine Größe haben, die in dem Bereich von 0,01 bis 0,5 µ liegt.

2. Beschichtungsmasse nach Anspruch 1, in der die Teilchen des Pigments in einer Menge von 50 bis 55 Gewichtsteilen je 100 Gewichtsteile des Acrylharzes vorhanden sind.

3. Beschichtungsmasse nach Anspruch 1 oder 2, bei der das Acrylharz aus Monomereinheiten hergestellt ist, die eine Hauptkette aus Acrylsäure, Methacrylsäure oder einem Ester davon und eine oder mehr als eine zur Vernetzung befähigte funktionelle Seitenkette aufweisen.

4. Beschichtungsmasse nach Anspruch 3, in der das Acrylharz ein wärmehärtbares amidomodifiziertess Acrylharz ist.

5. Beschichtungsmasse nach einem der Ansprüche 1 bis 4, in der die Teilchen des Fluorkohlenstoffharzes eine Größe haben, die in dem Bereich von 0,1 µm bis 1 µm liegt.

6. Beschichtungsmasse nach einem der Ansprüche 1 bis 5, in der das Fluorkohlenstoffharz Tetrafluorethylenharz, Vinylfluoridharz oder Vinylidenfluoridharz ist.

7. Beschichtungsmasse nach Anspruch 6, in der das Fluorkohlenstoffharz Tetrafluorethylenharz ist.

8. Beschichtungsmasse nach einem der Ansprüche 1 bis 7, bei der die Dispersion einen auf das Gewicht der Masse bezogenen Feststoffgehalt von 5 bis 20 Gew.-% hat.

9. Beschichtungsmasse nach Anspruch 8, bei der der Feststoffgehalt in dem Bereich von 10 bis 17 Gew.-% liegt.

**0 059 087**

10. Sonnenkollektor oder ähnlicher Gegenstand mit einem Metallsubstrat, auf dem sich eine Schicht befindet, die aus einer Masse nach einem der vorhergehenden Ansprüche erhalten wurde.

11. Gegenstand nach Anspruch 10, bei dem die Schicht eine Dicke von 1,5 bis 5,0 µm hat.

**Revendications**

1. Composition de revêtement pour absorption solaire sélective qui comprend une dispersion dans un liant de particules d'un pigment noir minéral, caractérisée par le fait que le liant est une résine acrylique thermodurcissable et par le fait que les particules d'une résine fluorée à bas poids moléculaire sont également dispersées dans le liant en même temps que les particules du pigment noir minéral choisi dans le groupe constitué par des oxydes et des oxydes doubles de Fe, Mn, Cu, Cr, Co et Ni et des mélanges de ces oxydes, les particules de la résine fluorée étant présente à raison de 5 à 15 parties en poids pour 100 parties en poids de la résine acrylique et les particules du pigment étant présentes en une quantité comprise entre 45 et 65 parties en poids pour 100 parties en poids de la résine acrylique et ayant une taille comprise entre 0,01 et 0,5 micromètre.

2. Composition de revêtement selon la revendication 1, dans laquelle les parties du pigment sont présentes en une quantité comprise entre 50 et 55 parties en poids pour 100 parties en poids de la résine acrylique.

3. Composition de revêtement selon la revendication 1 ou la revendication 2, dans laquelle la résine acrylique est constituée de motifs monomères ayant une chaîne principale d'acide acrylique, d'acide méthacrylique ou d'un ester de ces acides et une ou plusieurs chaîne(s) latérale(s) fonctionnelle(s) capables d'enchaînement par liaisons transversales.

4. Composition de revêtement selon la revendication 3, dans laquelle la résine acrylique est une résine acrylique thermodurcissable modifiée par un groupe amido.

5. Composition de revêtement selon l'une quelconque des revendications 1 à 4, dans laquelle les particules de la résine fluorée ont une taille comprise entre 0,1 et 1 micromètre.

6. Composition de revêtement selon l'une quelconque des revendications 1 à 5, dans laquelle la résine fluorée est une résine de tétrafluoroéthylène, une résine de fluorure de vinyle ou une résine de fluorure de vinylidène.

7. Composition de revêtement selon la revendication 6, dans laquelle la résine fluorée est la résine de tétrafluoroéthylène.

8. Composition de revêtement selon l'une quelconque des revendications 1 à 7, dans laquelle la dispersion a un taux de matières sèches compris entre 5 et 20% en poids de la composition.

9. Composition de revêtement selon la revendication 8, dans laquelle le taux de matières sèches est compris entre 10 et 17% en poids.

10. Capteur solaire ou article analogue comprenant un substrat métallique sur lequel est appliqué un revêtement obtenu à partir d'une composition selon l'une quelconque des revendications précédentes.

11. Article selon la revendication 10, dans lequel le film a une épaisseur comprise entre 1,5 et 5,0 micromètres.

# FIG. 1

FIG. 2

*FIG. 3(a)*

*FIG. 3(b)*

*FIG. 3(c)*

3

FIG. 4

0 059 087